# EUROPEAN PATENT APPLICATION

(11) **EP 2 722 971 A2**
(43) Date of publication of application: **23.04.2014**
(21) Application number: 13188385.2
(22) Date of filing: 11.10.2013
(51) Int. Cl.: H02K 1/27, H02K 15/03

(54) **Motor and washing maching having the same**

(30) Priority: 16.10.2012 KR 20120115097
(71) Applicant: Samsung Electronics Co., Ltd, Gyeonggi-do 443-742 (KR)
(72) Inventor: Yoon, Keun Young, Gyeonggi-do (KR); Kim, Young Kwan, Gyeonggi-Do (KR)
(74) Representative: Walaski, Jan Filip

(57) **Abstract**

A motor includes a stator and a rotor rotatably disposed at an inside or outside of the stator. The rotor includes a plurality of rotor cores radially disposed, a plurality of magnets respectively disposed between the rotor cores, a moulding to support the rotor cores and the magnets and define an accommodation space to accommodate an inner magnetizing yoke to magnetize the magnets, and a gap maintaining portion formed at at least one section of an inner circumferential surface of the moulding in order to maintain a gap between an outer circumferential surface of the inner magnetization yoke and inner circumferential surfaces of the rotor cores between about 2 mm and about 5 mm when the inner magnetization yoke is accommodated in the accommodation space to magnetize the magnets.

## Description

The present invention relates to a motor and a washing machine having the same.

A washing machine, which washes clothes using electricity, generally includes a tub to retain wash water, a drum rotatably installed in the tub and a motor to rotate the drum.

The motor, which produces rotating power from electric energy, is provided with a stator and a rotor. The rotor is configured to electromagnetically interact with the stator, and is rotated by force acting between a magnetic field and current flowing through a coil.

To increase torque produced per volume by concentrating magnetic flux, a magnetic flux concentrated-type motor includes a stator, a rotor disposed at the inside or outside of the stator to rotate by interacting with the stator and provided with segmented rotor cores disposed in the circumferential direction of the rotor and permanent magnets (hereinafter, referred to as "magnets") respectively coupled between the rotor cores.

The magnets are coupled between the rotor cores by magnetizing the magnets and then coupling the magnetized magnets between the rotor cores (hereinafter, referred to as "pre-magnetization technique") or by coupling the magnets between the rotor cores and then magnetizing the magnets (hereinafter, referred to as "post-magnetization technique"). When the pre-magnetization technique is used, magnetization of the magnets is easily implemented, but attractive force or repulsive force acing between the magnets may make it difficult to couple the magnets between the rotor cores and even cause damage to surrounding devices. For this reason, the post-magnetization technique has often been used in recent years.

For the post-magnetization technique which facilitates coupling of the magnets between the rotor cores, uniform magnetization may not be easy since magnetization proceeds after the magnets are coupled between the rotor cores. Therefore, there is a demand for an improved structure for the rotor.

Therefore, it is an aspect of the present disclosure to provide a motor having an improved rotor which allows uniform magnetization of a magnet.

Additional aspects of the disclosure will be set forth in part in the description which follows and, in part, will be apparent from the description, or may be learned by practice of the disclosure.

In accordance with one aspect of the present disclosure, a motor includes a stator, and a rotor rotatably disposed at an inside or outside of the stator, wherein the rotor includes a plurality of rotor cores radially disposed, a plurality of magnets respectively disposed between the rotor cores, a moulding to support the rotor cores and the magnets and define an accommodation space to accommodate an inner magnetizing yoke to magnetize the magnets, and a gap maintaining portion formed at at least one section of an inner circumferential surface of the moulding in order to maintain a gap between an outer circumferential surface of the inner magnetization yoke and inner circumferential surfaces of the rotor cores between about 2 mm and about 5 mm when the inner magnetization yoke is accommodated in the accommodation space to magnetize the magnets.

The gap maintaining portion may be substantially parallel with a direction in which a rotational axis of the rotor extends.

A length of the gap maintaining portion formed in an axial direction of the rotor may be equal to or greater than a length of the magnets.

When the inner magnetization yoke is accommodated in the accommodation space, a gap between one surface of the inner magnetizing yoke adjacent to a bottom surface of the moulding and one surface of the magnets adjacent to the bottom surface of the moulding may be smaller than 1/10 a length of the magnets.

The inner circumferential surface of the moulding may be substantially perpendicular to a bottom surface of the moulding.

In magnetizing the magnets, a gap between an outer magnetizing yoke disposed at an outside of the rotor to magnetize the magnets together with the inner magnetizing yoke and outer circumferential surfaces of the rotor cores may be between about 0.2 mm and about 0.5 mm.

The rotor may include at least one first reinforcing rib formed on a bottom surface of the moulding to reinforce the rotor, and at least one second reinforcing rib formed on an outer surface of the moulding opposite to the bottom surface of the moulding to reinforce the rotor, wherein a length of the second reinforcing rib in a direction in which a radius of the rotor increases may be greater than a length of the first reinforcing rib.

The first reinforcing rib and the second reinforcing rib may be radially disposed with respect to a center of rotation of the rotor.

The magnets may include a first magnet and a second magnet forming magnetic fluxes in opposite directions toward one of the rotor cores disposed therebetween.

The magnetic fluxes from the first magnet and the second magnet may be introduced into the one of the rotor cores disposed between the first magnet and the second magnet, combined, and discharged toward the stator.

In accordance with another aspect of the present disclosure, a washing machine includes a body, a tub disposed in the body, a drum rotatably disposed in the tub, and a motor including a stator fixed to a rear surface of the tub and a rotor rotatably disposed inside the stator, wherein the rotor includes a plurality of magnets arranged in a circumferential direction of the rotor, a plurality of rotor cores alternated with the magnets in the circumferential direction of the rotor, magnetic fluxes formed at the magnets being concentrated at the rotor cores, and a moulding to support the rotor cores and the magnets and define an accommodation space to accommodate an inner magnetizing yoke to magnetize the magnets, wherein, when the inner magnetization yoke is accommodated in the accommodation space, a gap between one surface of the inner magnetizing yoke adjacent to a bottom surface of the moulding and one surface of the magnets adjacent to the bottom surface of the moulding is smaller than 1/10 a length of the magnets.

When the inner magnetization yoke is accommodated in the accommodation space, an outer circumferential surface of the inner magnetizing yoke may be disposed parallel with an inner circumferential surface of the moulding.

When the inner magnetization yoke is accommodated in the accommodation space, a gap between an outer circumferential surface of the inner magnetizing yoke and an inner circumferential surface of the moulding may be between about 0.5 mm and about 3 mm.

An inner circumferential surface of the moulding may be substantially perpendicular to the bottom surface of the moulding.

These and/or other aspects of the disclosure will become apparent and more readily appreciated from the following description of the embodiments, taken in conjunction with the accompanying drawings of which:
FIG. 1 is a view illustrating a washing machine according to an exemplary embodiment of the present disclosure;
FIG. 2 is a view illustrating a tub and a stator and rotor of a motor of the washing machine according to the exemplary embodiment of the present disclosure, in which the tub, stator and rotor are separated from each other;
FIG. 3 is a perspective view of the stator of FIG. 2;
FIG. 4 is an exploded perspective view illustrating constituents of the stator of FIG. 3,
which are separated from each other;
FIG. 5 is an exploded perspective view of FIG. 4 taken at a different angle;
FIG. 6 is an enlarged view of section 'A' of FIG. 4;
FIG. 7 is an enlarged view of section 'B' of FIG. 2;
FIGS. 8 and 9 are perspective views of the rotor of FIG. 2;
FIG. 10 is a cross-sectional view taken along line I-I of FIG. 9;
FIG. 11 is a plan view illustrating the rotor cores and the magnets of the rotor of FIG. 2;
FIG. 12 is an enlarged view of section 'C' of FIG. 11;
FIG. 13 is a view illustrating coupling of a moulding to the rotor cores and the magnets shown in FIG. 12;
FIG. 14 is a perspective view illustrating arrangement of the magnetization yokes at the inside and outside of the rotor of FIG. 2;
FIG. 15 is a cross-sectional view taken along line II-II of FIG. 14; and
FIG. 16 is a partial cross-sectional view taken along line III-III of FIG. 14, illustrating magnetization of the magnets by the magnetization yokes.

Reference will now be made in detail to the embodiments of the present disclosure, examples of which are illustrated in the accompanying drawings, wherein like reference numerals refer to like elements throughout. Hereinafter, a description will be given of a washing machine with a motor, which is applicable to all kinds of apparatuses including an air conditioner, an electric vehicle, a light rail transit system, an electric bicycle and a small generator that employ a motor as a power source. Hereinafter, a washing machine will be described as an example of application of the motor.

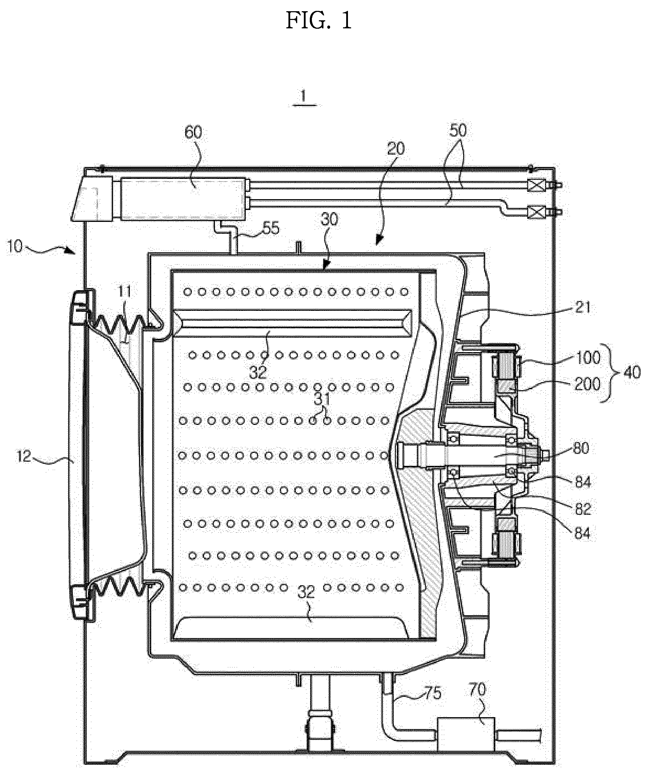

FIG. 1 is a view illustrating a washing machine according to an exemplary embodiment of the present disclosure.

As shown in FIG. 1, the washing machine 1 includes a cabinet 10 forming the external appearance of the washing machine 1, a tub 20 disposed within the cabinet 10, a drum 30 rotatably disposed in the tub 20, and a motor 40 to rotate the drum 30.

The front portion of the cabinet 10 is provided with an inlet 11 through which laundry may be inserted into the drum 30. The inlet 11 is opened and closed by a door 12 installed at the front of the cabinet 10.

A water supply pipe 50 to supply wash water to the tub 20 is installed at an upper portion of the tub 20. One side of the water supply pipe 50 is connected to an external water supply source (not shown), and the other side of the water supply pipe 50 is connected to a detergent supply unit 60. The detergent supply unit 60 is connected to the tub 20 through a connection pipe 55. Water flowing into the water supply pipe 50 is supplied to the tub 20 along with a detergent via the detergent supply unit 60.

Installed at the bottom of the tub 20 are a drain pump 70 and drain pipe 75 to discharge water in the tub 20 from the cabinet 10.

A plurality of through holes 31 is formed around the drum 30 to allow flow of wash water therethrough, and a plurality of lifters 32 is installed on the inner circumferential surface of the drum 30 to allow the laundry to tumble during rotation of the drum 30.

The drum 30 and motor 40 are connected to each other through a drive shaft 80. The drive shaft 80 transmits the rotating power of the motor 40 to the drum 30. One end of the drive shaft 80 is connected to the drum 30, and the other end of the drive shaft 80 extends to the outside of the rear wall 21 of the tub 20.

Installed at the rear wall 21 of the tub 20 is a bearing housing 82 by which the drive shaft 80 is rotatably supported. The bearing housing 82 may be formed of an aluminum alloy, and may be inserted into the rear wall 21 of the tub 20 when the tub 20 is manufactured through injection moulding. Bearings 84 are installed between the bearing housing 82 and the drive shaft 80 to allow smooth rotation of the drive shaft 80.

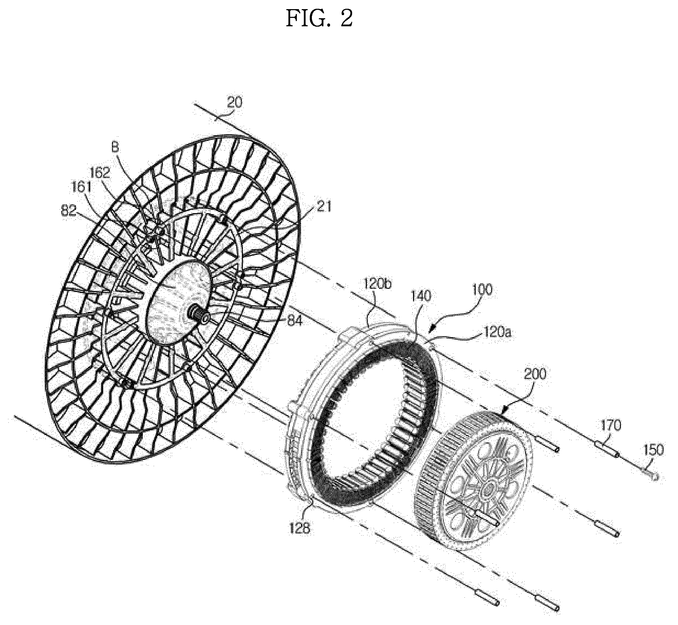

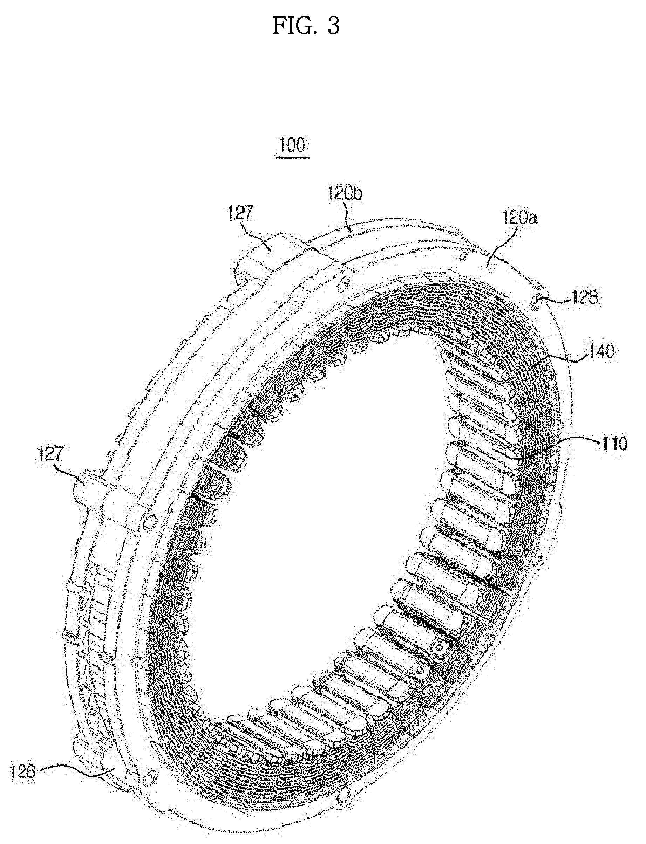

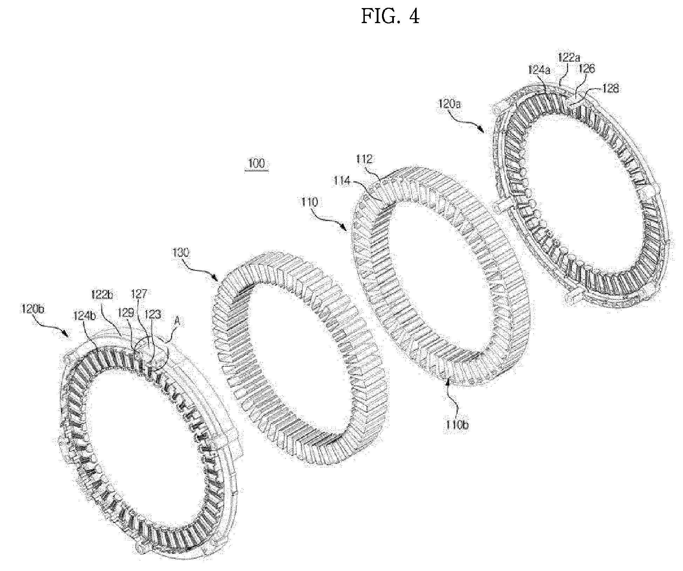

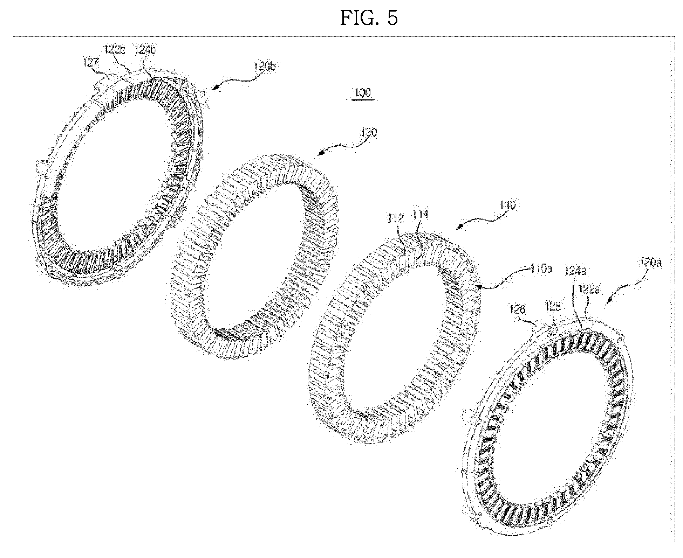

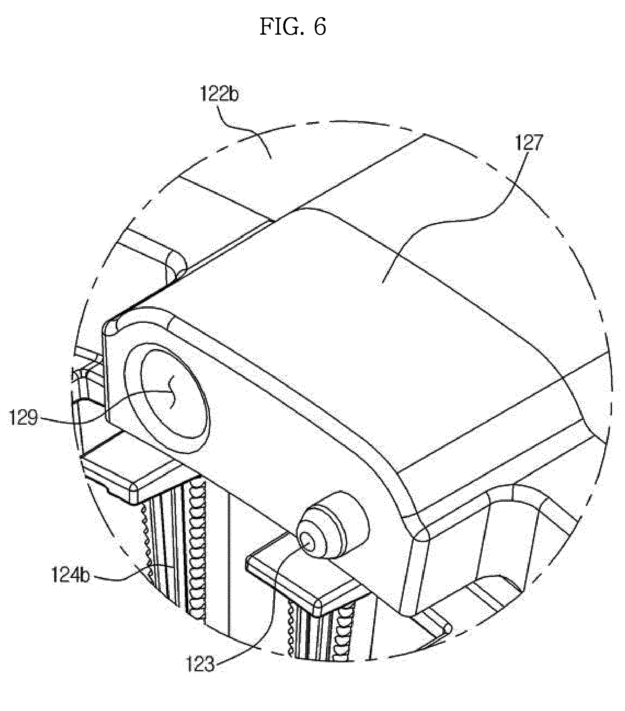

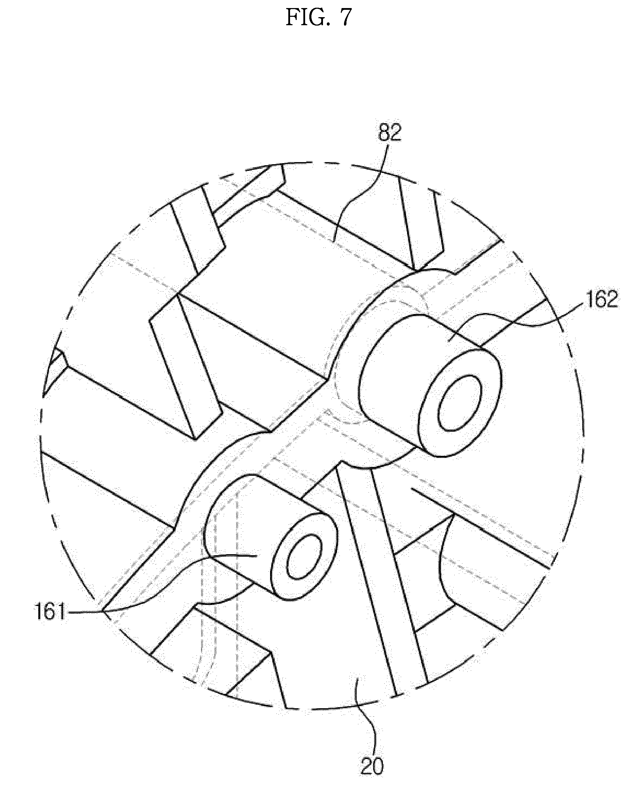

FIG. 2 is a view illustrating a tub and a stator and rotor of a motor of the washing machine according to the exemplary embodiment of the present disclosure, in which the tub, stator and rotor are separated from each other, and FIG. 3 is a perspective view of the stator of FIG. 2. FIG. 4 is an exploded perspective view illustrating constituents of the stator of FIG. 3, which are separated from each other, and FIG. 5 is an exploded perspective view of FIG. 4 taken at a different angle. FIG. 6 is an enlarged view of section 'A' of FIG. 4, and FIG. 7 is an enlarged view of section 'B' of FIG. 2. The coil is shown in FIGS. 4 and 5.

As shown in FIGS. 1 to 7, the motor 40 is coupled to the outside of the tub 20 to drive the drum 30 in opposite directions. The motor 40 includes a stator 100 mounted to the rear wall 20 of the tub 20, and a rotor 200 disposed around the stator 100 to rotate through electromagnetic interaction with the stator 100.

The stator 100 includes a stator core 110 formed of a metal material, a first insulator 120a and a second insulator 120b covering both ends 110a and 110b of the stator core 110, an insulation film 130 inserted between the first insulator 120a and the second insulator 120b, and a coil 140 wound around the first insulator 120a, the second insulator 120b and the insulation film 130. The stator core 110 may be formed by stacking metal plates processed through press working. The first insulator 120a, second insulator 120b and insulation film 130 may be formed of electrical insulators.

The stator core 110 includes a ring-shaped core body 112, and a plurality of core teeth 114 extending inward from the inner circumferential surface of the core body 112 in the radial direction of the core body 112 and arranged spaced apart from each other along the inner circumferential surface of the core body 112.

The first insulator 120a includes a first insulator body 122a having a shape corresponding to that of the core body 112, and a plurality of first insulator teeth 124a having a shape corresponding that of the core teeth 114. The first insulator teeth 124a extend inward in the radial direction of the first insulator body 122a and are arranged spaced apart from each other along the inner circumferential surface of the first insulator body 122a.

The first insulator 120a further includes a plurality of connection ribs 126 connected to the second insulator 120b, and first through holes 128 to fix the tub 20 to the rear wall 21 therethrough. The connection ribs 126 protrude from the first insulator body 122a toward the second insulator 120b, and are arranged spaced a predetermined distance apart from each other in the circumferential direction of the first insulator body 122a and adapted to be connected to the second insulator 120b when the stator core 110, first insulator 120a and second insulator 120b are coupled to each other. The first through holes 128 are formed through the first insulator body 122a and the connection rib 126. Sleeves 170 may be inserted into the first through holes 128 to reinforce fastening of the stator 100 to the tub 20.

The length of the connection rib 126 protruding from the first insulator 120a may vary depending on the stack height of the stator core 110. That is, if the stack of the stator core 110 is high, the connection rib 126 may be formed to have a long protruding length. If the stack of stator core 110 is short, the connection rib 126 may be formed to have a short protruding length. In case that the connection ribs 126 and the first insulator 120a are integrally formed through injection moulding, a mould for injection moulding of the first insulator 120a does not need to be separately fabricated whenever the length of the connection ribs 126 changes according to change in the stack height of the stator core 110, but one mould may be used in common. The length of the connection ribs 126 may be adjusted during fabrication of the first insulator 120a through injection moulding by filling a portion of the mold for formation of the connection ribs 126, which is pre-formed to have a deep depth, to the height corresponding to the protruding length of the connection ribs 126, using a tool such as a jig.

The second insulator 120b includes a second insulator body 122b having a shape corresponding to that of the core body 112, and a plurality of second insulator teeth 124b having a shape corresponding to that of the core teeth 114. The second insulator teeth 124b extend inward in the radial direction of the second insulator body 122b and are arranged spaced apart from each other along the inner circumferential surface of the second insulator body 122b.

The second insulator 120b further includes a plurality of fixing ribs 127 connected to the tub 20, second through holes 129 formed through the second insulator body 122b and the fixing rib 127, and a plurality of fixing pins 123 protruding from surfaces of the fixing ribs 127 facing the rear wall 21 of the tub 20 toward the rear wall 21 of the tub 20.

The fixing ribs 127 protrude from the second insulator body 122b toward the rear wall 21 of the tub 20, and are arranged spaced a predetermined distance apart from each other in the circumferential direction of the second insulator body 122b. The fixing ribs 127 contact the rear wall 21 of the tub 20 when the stator 110 is coupled to the tub 20.

The fixing pins 123 are adapted to determine the position of the stator 100 before being inserted into the rear wall 21 of the tub 20 to fix the stator 100 to the rear wall 21 of the tub 20. The second through holes 129 are formed through the second insulator body 122b and the fixing ribs 127, and are disposed to be concentric with the first through holes 128. Sleeves 170 may be inserted into the second through holes 129 to reinforce fastening of the stator 100 to the tub 20.

First accommodation holes 161 to accommodate the fixing pins 123 inserted thereinto are provided at the rear wall 21 of the tub 20 to which the stator 100 is mounted. The bearing housing 82 inserted into the rear wall 21 of the tub 20 is provided with second accommodation holes 162 to accommodate fixing members 150 inserted thereinto. At least two first accommodation holes 161 and at least two second accommodation holes 162 are arranged spaced apart from each other in the circumferential direction of the tub 20.

The first accommodation holes 161 allow the position of the stator 100 to be determined before the fixing pins 142 are accommodated therein to fix the stator 100 to the rear wall 21 of the tub 20, while the second accommodation holes 162 accommodate the fixing members 150 penetrating the sleeves 170, thereby allowing the stator 100 to be fixed to the rear wall 21 of the tub 20.

The bearing housing 82 is inserted into the rear wall 21 of the tub 20 to reinforce the tub 20, and directly coupled to the stator 100 through the second accommodation holes 162 to allow the stator 100 to be stably fixed to the rear wall 21 of the tub 20.

Although not shown in FIGS. 1 to 7, first accommodation holes 161 and the second accommodation holes 162 may be provided in the bearing housing 82.

The insulation film 130 is inserted between the first insulator 120a and the second insulator 120b.

The insulation film 130 is formed approximately in a bracket shape, and disposed between one of the first insulator teeth 124a and one of the second insulator teeth 124b neighboring each other to electrically insulate the stator core 110 and the coil 140. The insulation film 130 may be formed of paper or plastics which are electrically nonconductive.

The coil 140 is wound around the first insulator 120a, second insulator 120b and insulation film 130. When 3-phase alternating current (AC) power is supplied to the coil 140, magnetic flux is created at the stator core 110. The magnetic flux created at the stator core 110 interacts with the magnetic flux created at the rotor 200 to rotate the rotor 200.

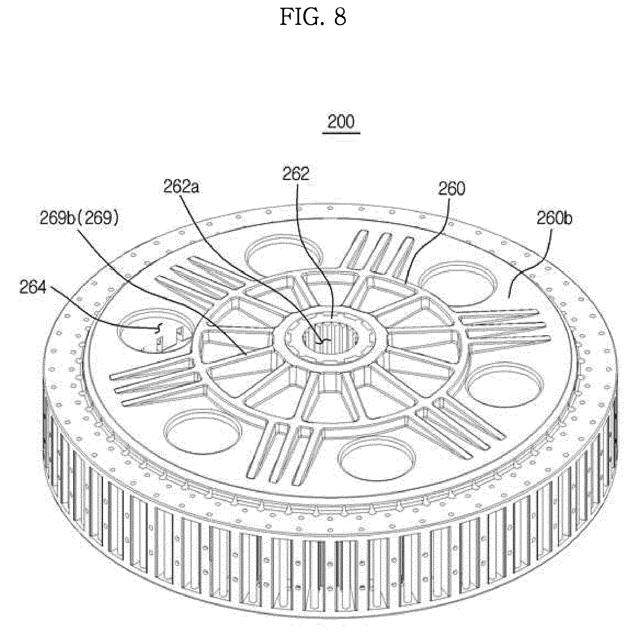

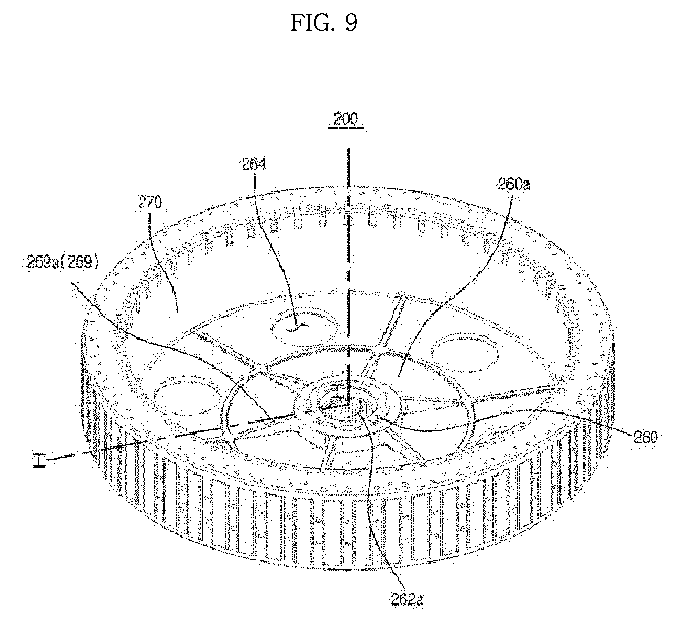

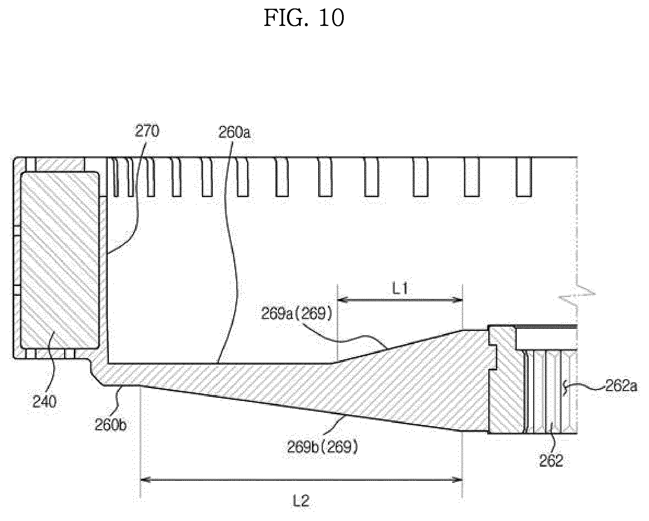

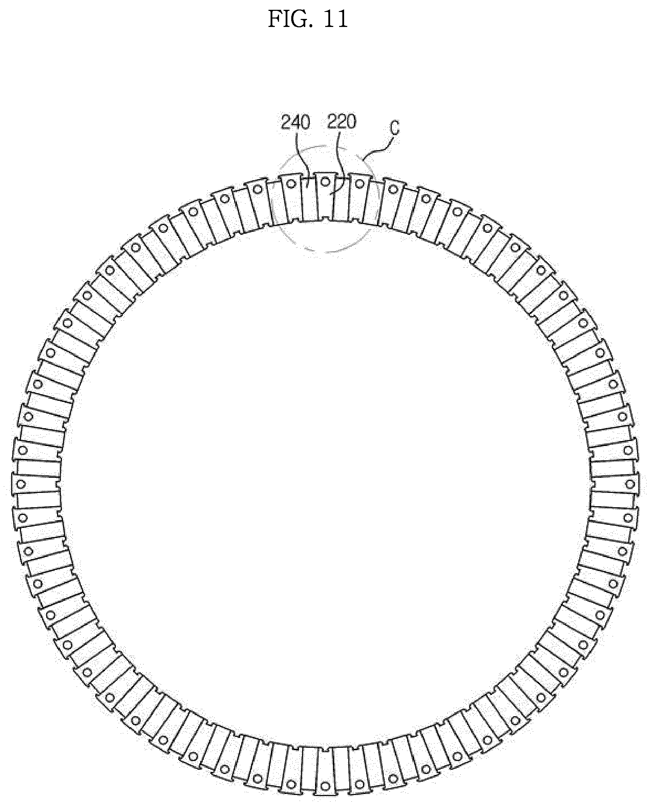

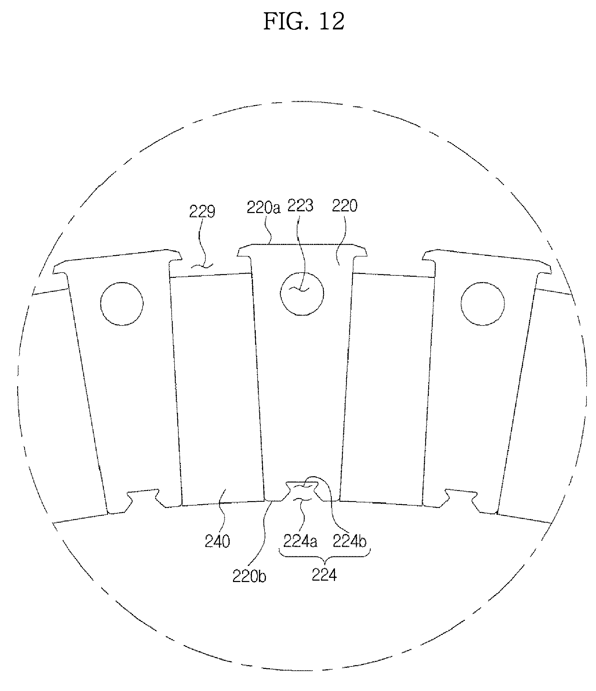

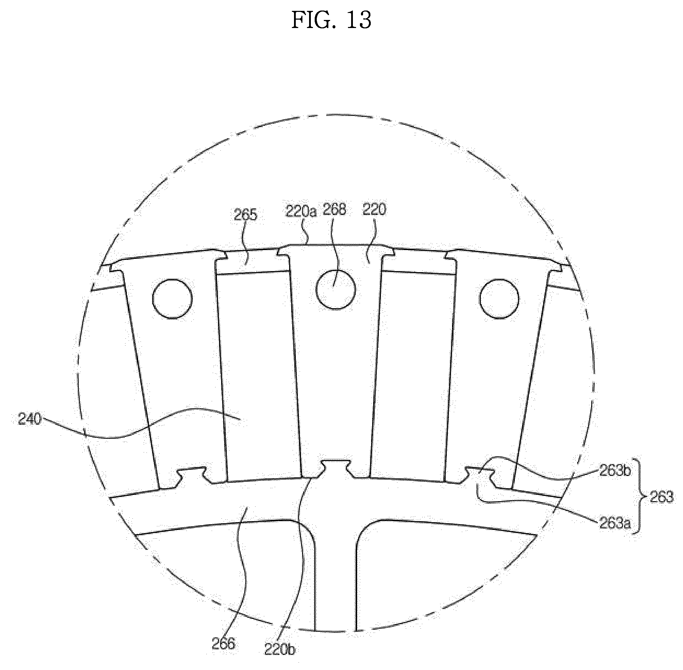

FIGS. 8 and 9 are perspective views of the rotor of FIG. 2, and FIG. 10 is a cross-sectional view taken along line I-I of FIG. 9. FIG. 11 is a plan view illustrating the rotor cores and the magnets of the rotor of FIG. 2, FIG. 12 is an enlarged view of section 'C' of FIG. 11, and FIG. 13 is a view illustrating coupling of a moulding to the rotor cores and the magnets shown in FIG. 12.

As shown in FIGS. 8 to 13, the rotor 200 includes a plurality of rotor cores 220 disposed in a radial shape, a plurality of magnets 240 respectively disposed between the rotor cores 220, and a moulding (body) 260 to support the rotor cores 220 and the magnets 240.

The rotor cores 220 support the magnets 240, and form a magnetic path created at the magnets 240. The rotor cores 220 are arranged along the circumferential direction of the rotor 200, and respectively disposed spaced apart from each other between the rotor cores 220 to accommodate the magnets 240.

Each of the rotor cores 220 includes an inner end 220b disposed adjacent to the center of the rotor 200, and an outer end 220a disposed adjacent to the core teeth 114 of the stator core 110 to define an air gap in cooperation with the core teeth 114. The width of each of the rotor cores 220 in a circumferential direction increases from the inner end 220b thereof to the outer end 220a thereof. The rotor cores 220 may be formed by stacking silicon steel plates processed through press working.

In addition, each of the segmented rotor cores 220 includes a through hole 223 and a coupling groove 224. The through hole 223 and coupling groove 224 are coupled to the moulding 260 that supports the rotor cores 220.

The through hole 223 is formed through the body of the rotor core 220 such that the moulding 260 is accommodated therein and coupled thereto during fabrication of the moulding 260 through injection moulding. The diameter of the through hole 223 may be between about 1.5 mm and about 5 mm. If the diameter of the through hole 223 is too small, the rotor cores 220 may not be securely supported by the moulding 260. If the diameter of the through hole 223 is too large, the magnetic flux concentrated at the rotor core 220 may interrupt creation of a magnetic path through the outer end 220a of the rotor core 220.

In addition, a plurality of through holes 223 may be disposed in the radial direction of the rotor 200. If the number of the through holes 223 is too large, they may interrupt creation of a magnetic path through the outer end 220a of the rotor core 220 as in the case of the through hole 223 having too large a diameter, which may cause the magnetic flux concentrated at the rotor core 220 to interrupt creation of the magnetic path through the outer end 220a of the rotor core 220. Therefore, the number may be equal to or less than three.

The coupling groove 224 includes a first accommodation portion 224a formed approximately at the center of the inner end 220b of the rotor core 220 and having a width in a circumferential direction which decreases as the first accommodation portion 224a extends from the inner end 220b toward the outer end 220a, and a second accommodation portion 224b connected with the first accommodation portion 224a, and having a width which increases as the second accommodation portion 224b extends from the inner end 220b toward the outer end 220a.

The first accommodation portion 224a and the second accommodation portion 224b accommodate the moulding 260 when the moulding 260 is fabricated through injection moulding such the rotor core 220 and the moulding 260 are securely coupled to each other.

The magnets 240, each of which is disposed between corresponding ones of the rotor cores 220, are arranged along the circumferential direction of the rotor 200 to be radially positioned with respect to the center of the rotor 200. The magnet 240 may be a magnet containing a rare-earth element such as neodymium and samarium or a ferrite magnet which may semi-permanently maintain the magnetic property of high energy density.

The magnetic fluxes created at the magnets 240 are arranged along the circumferential direction of the rotor 200. Any two neighboring ones of the magnets 240 are disposed such that the portions thereof having the same polarity face each other. If a magnetic circuit is formed in this way, the magnetic flux generated by the magnets 240 is concentrated, and therefore it may be possible to reduce the size of the motor 40 while improving the performance thereof.

The moulding 260 includes a serration 262 coupled to the drive shaft 80, heat dissipation outlets 264 to dissipate heat generated during rotation of the rotor 200, and a plurality of reinforcing ribs 269.

The serration 262 includes a shaft hole 262a into which the drive shaft 80 is inserted to be coupled thereto. The serration 262 may be formed of a metal material such that the drive shaft 80 is firmly coupled thereto, and may be inserted into a mold for fabrication of the moulding 260 during formation of the moulding 260 through injection moulding.

The reinforcing ribs 269 include at least one first reinforcing rib 269a radially formed on the bottom surface 260a of the moulding 260 around a shaft hole 262a to reinforce the rotor 200, and at least one second reinforcing rib 269b radially formed on the outer surface 260b of the moulding 260 opposite to the bottom surface 260a of the moulding 260 around the shaft hole 262a to reinforce the rotor 200. The portions of the first reinforcing rib 269 and the second reinforcing rib 269b to which the serration 262 is coupled are formed to be thick such that the serration 262 is firmly coupled to the moulding 260. The length L1 of the first reinforcing rib 269a is shorter than the length L2 of the second reinforcing rib 269b in the direction in which the radius of the rotor 200 increases. If the length L1 of the first reinforcing rib 269a is too long in the direction in which the radius of the rotor 200 increases, interference with the inner magnetizing yoke 320 to magnetize the magnets 240 may occur.

The moulding 260 further includes a ring-shaped bridge 266 to support the rotor cores 220 and the magnets 240, and a first to third coupling ribs 263, 265 and 268 to couple the moulding 260 with the rotor cores 220 and the magnets 240.

The first coupling rib 263 includes a first inclined protrusion 263a protruding outward from the outer circumferential surface of the bridge 266 in the radial direction of the rotor 200 and inclined in a direction in which the width thereof decreases as the first coupling rib 263 extends outward, and a second inclined protrusion 263b formed from the first inclined protrusion 263a to be inclined in a direction in which the width thereof increases as the second inclined protrusion 263b extends from the first inclined protrusion 263a.

The first inclined protrusion 263a is accommodated in and coupled to the first accommodation portion 224a and the second inclined protrusion 263b is accommodated in and coupled to the second accommodation portion 224b, such that the rotor core 200 is coupled to the bridge 266. Particularly, the second inclined protrusion 263b is formed in the shape of a step whose width increases in the circumferential direction of the rotor 200, thereby effectively preventing the rotor core 220 from being separated from the bridge 226 by centrifugal force generated during rotation of the rotor 200.

The second coupling rib 265 is accommodated in a space 229 formed by respective surfaces of neighboring rotor cores 220 facing each other and one end of a magnet 240 disposed between the neighboring rotor cores 220 to reinforce the rotor 200 and prevent exposure of the magnet 240 to the outside.

The third coupling rib 268 is accommodated in and coupled to the through hole 223 provided in the rotor core 220 to prevent, in cooperation with the second inclined protrusion 263b, the rotor core 220 from being separated from the bridge 266.

The first to third coupling ribs 263, 265 and 268 are respectively formed in shapes corresponding to those of the coupling groove 224, the space 229 formed by the rotor cores 220 and the magnet 240, and the through hole 229 during the process of integration of the moulding 260 with the rotor cores 220 and the magnets 240 using the insert injection moulding technique.

When coupled to a plurality of the rotor cores 220 by the moulding 260, the magnets 240 are magnetized by the magnetizing yokes 300 disposed at the inside and outside of the rotor 200.

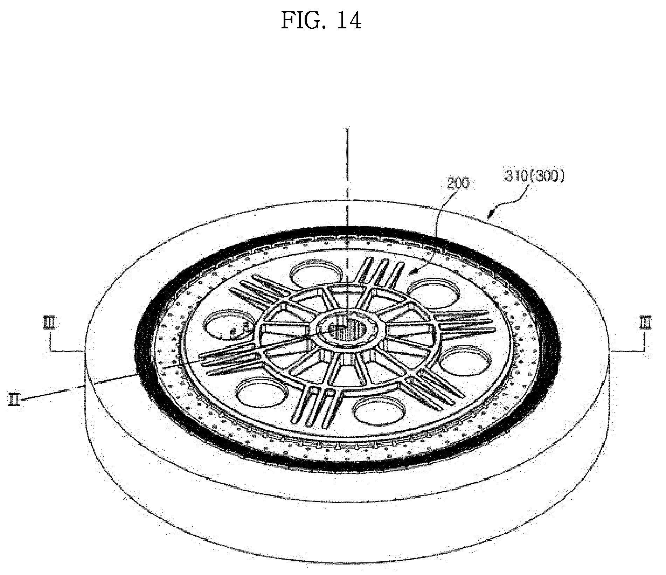

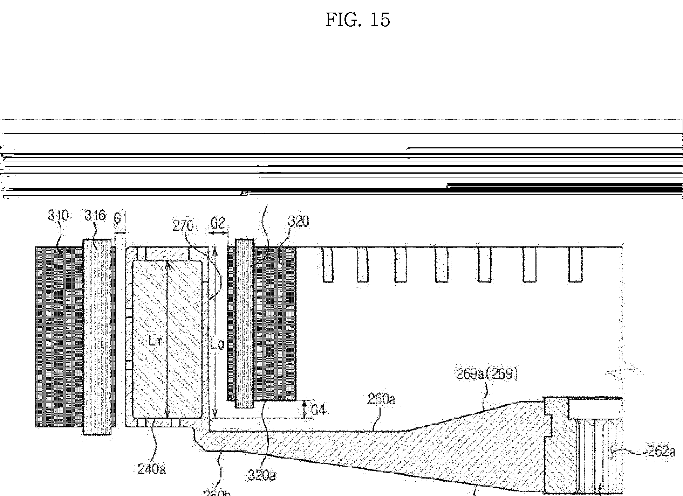

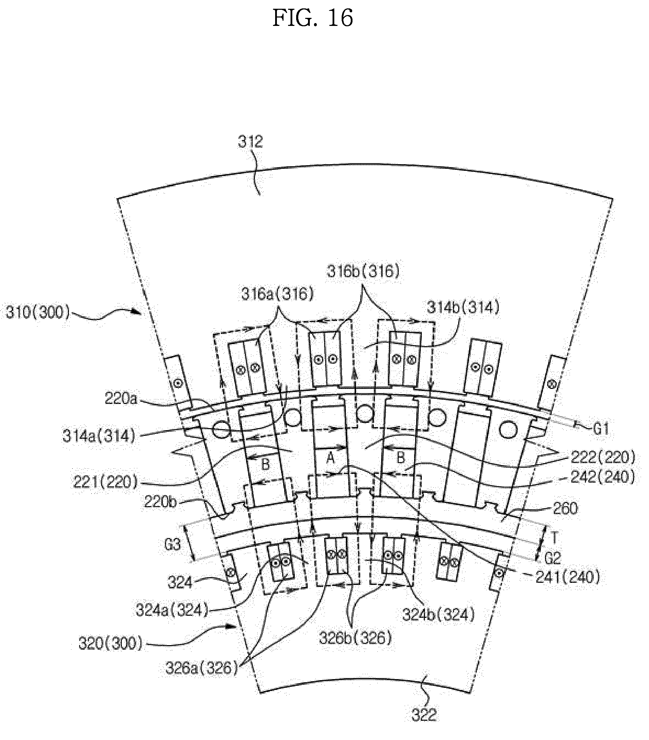

FIG. 14 is a perspective view illustrating arrangement of the magnetization yokes at the inside and outside of the rotor of FIG. 2, and FIG. 15 is a cross-sectional view taken along line II-II of FIG. 14. FIG. 16 is a partial cross-sectional view taken along line III-III of FIG. 14, illustrating magnetization of the magnets by the magnetization yokes.

As shown in FIGS. 14 to 16, the magnetizing yokes 300 include an outer magnetizing yoke 310 disposed at the outside of the rotor 200, and an inner magnetizing yoke 320 disposed at the inside of the rotor 200.

The outer magnetizing yoke 310 includes a ring-shaped body 312, a plurality of magnetizing teeth 314 extending inward from the body 312 in the radial direction of the body 312 and radially spaced apart from each other, and a plurality of magnetizing coils 316 wound around the magnetizing teeth 314.

The magnetizing teeth 314 are disposed to be adjacent to the outer ends 220a of the rotor cores 220 during magnetization of the magnets 240. The gap G1 between the magnetizing teeth 314 and the outer ends 220a of the rotor cores 220 may be between about 0.2 mm and about 0.5 mm. If the gap G1 between the magnetizing teeth 314 and the outer ends 220a of the rotor cores 220 is less than 0.2 mm and thus too small, interference between the magnetizing teeth 314 and the outer ends 220a of the rotor cores 220 may be caused by the electromagnetic force generated between the outer magnetizing yoke 310 and the rotor 200 during magnetization. If the gap G1 between the magnetizing teeth 314 and the outer ends 220a of the rotor cores 220 is greater than 0.5 mm, the magnetic path formed along the magnetizing teeth 314 and the rotor cores 220 is elongated, and thereby magnetization efficiency may be lowered.

Electric current supplied to the magnetizing coils 316 alternately flows in opposite directions, and therefore magnetic flux is formed alternately in opposite directions at the magnetizing teeth 314 disposed along the circumferential direction of the rotor 200.

That is, as shown in FIG. 16, when current flows through the first coil 316a in the counterclockwise direction with respect to the axis along which the first magnetizing teeth 314a extend, current flows through the second coil 316b neighboring the first coil 316a in the clockwise direction with respect to the axis along which the second magnetizing teeth 314b extends, and the magnetic flux is formed at the first magnetizing teeth 314a toward the center of the rotor 200 and formed at the second magnetizing teeth 314b in a direction facing away from the center of the rotor 200.

As shown in FIG. 16, the magnetic flux formed at the first magnetizing teeth 314a and the magnetic flux formed at the second magnetizing teeth 314b form a magnetic path through the first rotor core 221 adjacent to the first magnetizing teeth 314a, the first magnet 241 and the second rotor core 222 to magnetize the first magnet 241 in the circumferential direction (direction A) of the rotor 200. Similarly, the second magnet 242 adjacent to the first magnet 241 is magnetized in the direction (direction B) opposite to the circumferential direction of the rotor 200.

The inner magnetizing yoke 320 includes a ring-shaped body 322, a plurality of magnetizing teeth 324 extending outward from the body 322 in the radial direction of the body 322 and radially spaced apart from each other, and a plurality of magnetizing coils 326 wound around the magnetizing teeth 324.

The magnetizing teeth 324 are disposed to be adjacent to the inner circumferential surface of the moulding 260 during magnetization of the magnets 240. The gap G2 between the magnetizing teeth 324 and the inner circumferential surface of the moulding 260 may be between about 0.5 mm and about 3 mm. If the gap G2 between the magnetizing teeth 324 and the inner circumferential surface of the moulding 260 is less than 0.5 mm and thus too small, interference between the gap G2 between the magnetizing teeth 324 and the inner circumferential surface of the moulding 260 may be caused by the electromagnetic force generated between the inner magnetizing yoke 320 and the rotor 200 during magnetization. If the gap G2 between the gap G2 between the magnetizing teeth 324 and the inner circumferential surface of the moulding 260 is greater than 3 mm, the magnetic path formed along the magnetizing teeth 324 and the rotor cores 220 is elongated, and thereby magnetization efficiency may be lowered.

The moulding 260 to support the inner ends 220b of the rotor cores 220 may be formed to have a thickness T between about 1.5 mm and about 2 mm. Accordingly, if the gap G2 between the magnetizing teeth 324 and the inner circumferential surface of the moulding 260 is maintained between about 0.5 mm and about 3 mm, the gap G3 between the magnetizing teeth 324 and the inner ends 220b of the rotor cores 220 is between about 2 mm and about 5 mm.

As such, to maintain the gap G2 between the inner circumferential surface of the moulding 260 and the magnetizing teeth 324 of the inner magnetizing yoke 320 between about 0.5 mm and about 3 mm, a gap maintaining portion 270 is provided on the inner circumferential surface of the moulding 260 facing the magnetizing teeth 324. The gap maintaining portion 270 is formed to be substantially parallel with the direction in which the rotational axis of the rotor 200 extends. When the inner magnetizing yokes 320 are accommodated and disposed inside of the moulding 260, the outer circumferential surfaces of the magnetizing teeth 324 are disposed substantially parallel with the gap maintaining portion 270.

The length Lg of the gap maintaining portion 270 extending in the direction in which the rotational axis of the rotor 200 extends may be equal to or greater than the length Lm of the magnet 240. If the length Lg of the gap maintaining portion 270 is less than the length Lm of the magnet 240, the magnetic flux created at the inner magnetizing yokes 320 may not uniformly reach the magnets 240, and thereby magnetizing efficiency may be lowered.

In addition, when the inner magnetizing yokes 320 are accommodated and disposed in the moulding 260, the gap G4 between one surface 320a of the inner magnetizing yoke 320 adjacent to the bottom surface 260a of the moulding 260 and one surface 240a of the magnet 240 adjacent to the bottom surface 260a of the moulding 260 may be smaller than 1/10 the length Lm of the magnet 240. If the gap G4 between the one surface 320a of the inner magnetizing yoke 320 and the one surface 240a of the magnet 240 exceeds 1/10 the length Lm of the magnet 240, the magnetic flux created at the inner magnetizing yokes 320 may not uniformly reach the magnets 240, and thereby magnetizing efficiency may be lowered.

Electric current supplied to the magnetizing coils 326 flows alternately in opposite directions, and therefore magnetic flux is formed alternately in opposite directions at the magnetizing teeth 324 disposed along the circumferential direction of the rotor 200. That is, as shown in FIG. 16, when current flows through the first coil 326a in the clockwise direction with respect to the axis along which the first magnetizing teeth 324a extend, current flows through the second coil 326b neighboring the first coil 326a in the counterclockwise direction with respect to the axis along which the second magnetizing teeth 324b extend, and the magnetic flux is formed at the first magnetizing teeth 324a toward the center of the rotor 200 and formed at the second magnetizing teeth 324b in a direction facing away from the center of the rotor 200.

As shown in FIG. 16, the magnetic flux formed at the first magnetizing teeth 324a and the magnetic flux formed at the second magnetizing teeth 324b form a magnetic path through the first rotor core 221 adjacent to the first magnetizing teeth 324a, the first magnet 241 and the second rotor core 222 to magnetize the first magnet 241 in the circumferential direction (direction A) of the rotor 200. Similarly, the second magnet 242 adjacent to the first magnet 241 is magnetized in the direction (direction B) opposite to the circumferential direction of the rotor 200.

As the outer magnetizing yokes 310 and the inner magnetizing yokes 320 are respectively disposed at the outside and inside of the rotor 200 to magnetize the magnets 240 at the same time, all regions of the magnets 240 may be uniformly magnetized.

In the meantime, the body 312 and magnetizing teeth 314 of the outer magnetizing yoke 310 and the body 322 and magnetizing teeth 324 of the inner magnetizing yoke 320 may be integrally fabricated of cold-rolled steel sheet. In addition, a stacked core may be used to prevent magnetic flux from being reduced by eddy current formed at the core when impulse current is applied.

As is apparent from the above description, by disposing magnetizing yokes at the inside and outside of a rotor, the magnets are uniformly magnetized and thus the performance of a motor may be improved.

Although a few embodiments of the present disclosure have been shown and described, it would be appreciated by those skilled in the art that changes may be made in these embodiments without departing from the principles of the invention, the scope of which is defined in the claims.

## Claims

1. A motor comprising:
a stator; and
a rotor rotatably disposed at an inside or outside of the stator,
wherein the rotor comprises:
a plurality of rotor cores radially disposed;
a plurality of magnets respectively disposed between the rotor cores;
a moulding to support the rotor cores and the magnets and define an accommodation space to accommodate an inner magnetizing yoke to magnetize the magnets; and
a gap maintaining portion formed at at least one section of an inner circumferential surface of the moulding in order to maintain a gap between an outer circumferential surface of the inner magnetization yoke and inner circumferential surfaces of the rotor cores between about 2 mm and about 5 mm when the inner magnetization yoke is accommodated in the accommodation space to magnetize the magnets.

2. The motor according to claim 1, wherein the gap maintaining portion is substantially parallel with a direction in which a rotational axis of the rotor extends.

3. The motor according to claim 1 or 2, wherein a length of the gap maintaining portion formed in an axial direction of the rotor is equal to or greater than a length of the magnets.

4. The motor according to any one of the preceding claims, wherein, when the inner magnetization yoke is accommodated in the accommodation space, a gap between one surface of the inner magnetizing yoke adjacent to a bottom surface of the moulding and one surface of the magnets adjacent to the bottom surface of the moulding is smaller than 1/10 of a length of the magnets.

5. The motor according to any one of the preceding claims, wherein the inner circumferential surface of the moulding is substantially perpendicular to a bottom surface of the moulding.

6. The motor according to any one of the preceding claims, wherein, in magnetizing the magnets, a gap between an outer magnetizing yoke disposed at an outside of the rotor to magnetize the magnets together with the inner magnetizing yoke and outer circumferential surfaces of the rotor cores is between about 0.2 mm and about 0.5 mm.

7. The motor according to any one of the preceding claims, wherein the rotor comprises:
at least one first reinforcing rib formed on a bottom surface of the moulding to reinforce the rotor; and
at least one second reinforcing rib formed on an outer surface of the moulding opposite to the bottom surface of the moulding to reinforce the rotor,
wherein a length of the second reinforcing rib in a direction in which a radius of the rotor increases is greater than a length of the first reinforcing rib.

8. The motor according to claim 7, wherein the first reinforcing rib and the second reinforcing rib are radially disposed with respect to a center of rotation of the rotor.

9. The motor according to any one of the preceding claims, wherein the magnets comprises a first magnet and a second magnet forming magnetic fluxes in opposite directions toward one of the rotor cores disposed therebetween.

10. The motor according to claim 9, wherein the magnetic fluxes from the first magnet and the second magnet are introduced into the one of the rotor cores disposed between the first magnet and the second magnet, combined, and discharged toward the stator.

11. A washing machine having a drum, and a motor according to any one of the preceding claims for driving the drum.
